# EUROPÄISCHE PATENTANMELDUNG

(11) **EP 4 850 897 A1**
(43) Veröffentlichungstag der Anmeldung: **09.12.2026**
(21) Anmeldenummer: 25181432.3
(22) Anmeldetag: 06.06.2025
(51) Int. Cl.: B29C 65/76, C09J 5/00

(54) **VERFAHREN ZUM LÖSEN EINER KLEBVERBINDUNG**

(71) Anmelder: Henkel AG & Co. KGaA, 40589 Düsseldorf (DE)
(72) Erfinder: FRIEDRICH, Norman, 40225 Düsseldorf (DE); SCHRIEFERS, Mathias, 41199 Mönchengladbach (DE); STAPF, Stefanie, 45549 Velbert (DE); FRANKEN, Uwe, 41542 Dormagen (DE)

(57) **Zusammenfassung**

Die Erfindung betrifft ein Verfahren zum Lösen einer Klebverbindung (13) zwischen einem ersten Bauteil (11) und einem zweiten Bauteil (12) einer Vorrichtung (1), wobei die Klebverbindung (13) innerhalb einer Einwirkungsdauer einer Schwächungsmaßnahme ausgesetzt wird, die geeignet ist, eine Haltekraft der Klebverbindung (13) während der Einwirkungsdauer zu reduzieren. Die Erfindung zeichnet sich dadurch aus, dass die Klebverbindung (13) während der Einwirkungsdauer mit einer Lösekraft beaufschlagt wird, durch die das erste Bauteil (11) und das zweite Bauteil (12) auseinandergezogen oder auseinandergedrückt werden, wobei die Haltekraft der Klebverbindung (13) der Lösekraft entgegenwirkt, wobei die Einwirkungsdauer mindestens so lange andauert, bis die Klebverbindung (13) zwischen dem ersten Bauteil (11) und dem zweiten Bauteil (12) gelöst ist.

## Beschreibung

Die Erfindung betrifft ein Verfahren zum Lösen einer Klebverbindung zwischen einem ersten Bauteil und einem zweiten Bauteil einer Vorrichtung.

Die Klebverbindung stellt eine einfache und kostengünstige Möglichkeit dar, zwei Bauteile miteinander zu verbinden. Um die Bauteile am Ende eines Lebenszyklus der Vorrichtung recyceln oder wiederverwerten zu können, besteht oft die Anforderung an die Klebverbindung, dass diese mit vertretbarem Aufwand gelöst werden kann, um die Bauteile voneinander getrennt recyceln oder wiederverwerten zu können.

Aber auch aus weiteren Gründen kann die Anforderung bestehen, die Klebverbindung mit vertretbarem Aufwand lösen zu können. Es kann wirtschaftlich sinnvoll sein und ist für bestimmte Vorrichtungen (zum Beispiel elektronische Vorrichtungen wie Mobiltelefone) auch gesetzlich vorgeschrieben sein, bei einem Defekt die Vorrichtung reparieren zu können. Eine Reparatur kann den Austausch des beispielsweise ersten Bauteils erfordern, wofür ein Lösen der Klebverbindung zwischen dem ersten Bauteil und dem zweiten Bauteil notwendig ist.

Derzeit werden daher von der Anmelderin dieser Patentanmeldung neue Klebverbindungen entwickelt, bei denen durch eine bewusst durchgeführte Maßnahme die Klebverbindung gezielt geschwächt bzw. eine Haltekraft der Klebverbindung gezielt reduziert wird. Ist die Klebverbindung ausreichend geschwächt, kann die Klebverbindung mit einer moderaten Lösekraft beaufschlagt werden, durch die das erste Bauteil von dem zweiten Bauteil getrennt wird. Die verbleibende Haltekraft wirkt dabei der Lösekraft entgegen.

Zur deren Schwächung wird die Klebverbindung innerhalb einer Einwirkungsdauer der bewusst durchgeführten Schwächungsmaßnahme ausgesetzt. Ein Beispiel für eine solche Schwächungsmaßnahme bei einer wasserlöslichen Klebverbindung ist die Beaufschlagung der Klebverbindung mit Wasser. Wirkt das Wasser für eine bestimmte Zeit auf die Klebverbindung ein, verliert sie ihre haftende Wirkung, sodass die verbleibende Haltekraft immer kleiner wird und vergleichsweise einfach getrennt werden kann.

Erst nachdem die Klebverbindung zwischen den beiden Bauteilen für eine bestimmte Zeit der ausgewählten Schwächungsmaßnahme ausgesetzt wurde, wird nach dem Stand der Technik die derart geschwächte Klebverbindung mit der Lösekraft beaufschlagt. Die Lösekraft wird dabei kontinuierlich gesteigert, bis sie größer als die verbleibende Haltekraft ist. Sobald die Lösekraft die verbleibende Haltekraft übersteigt, wird die geschwächte Klebverbindung aufgebrochen bzw. gelöst.

Die beiden Bauteile sind dann nicht mehr klebend miteinander verbunden und können voneinander getrennt werden.

Soll eine Serie oder Vielzahl von Vorrichtungen in einem industriellen Maßstab recycelt oder wiederverwertet werden, muss berücksichtigt werden, dass nach einer gewissen Einwirkungsdauer der durchgeführten Schwächungsmaßnahme die verbleibende Haltekraft von Vorrichtung zu Vorrichtung aufgrund der statistischen Streuung schwankt und unterschiedlich groß sein kann. Dies führt dazu, dass beim anschließenden Trennen der beiden Bauteile die erforderliche Lösekraft unterschiedlich groß ist. Entsprechend müssen Mittel (beispielsweise eine Zugkraftmaschine) vorgehalten werden, durch die eine vergleichsweise große maximale Lösekraft in die Klebverbindung eingeleitet werden kann, damit auch bei allen Vorrichtungen der Serie die betreffenden Bauteile sicher und zuverlässig voneinander getrennt werden können.

Um nicht eine zu große maximale Lösekraft vorhalten zu müssen, können die Einwirkungsdauer verlängert und/oder die Intensität der Schwächungsmaßnahme erhöht werden. Dies jedoch erhöht den zeitlichen Aufwand und die Kosten für das zuverlässige Lösen der Klebstoffverbindung.

Der Erfindung liegt daher die Aufgabe zu Grunde, ein Verfahren zum Lösen einer Klebverbindung bereitzustellen, das zuverlässig funktioniert und einfach und effizient durchgeführt werden kann.

Die der Erfindung zu Grunde liegende Aufgabe wird mit dem Gegenstand gemäß Anspruch 1 gelöst. Ausführungsbeispiele können den Unteransprüchen zu Anspruch 1 entnommen werden.

Erfindungsgemäß ist vorgesehen, dass die Klebverbindung während der Einwirkungsdauer mit einer Lösekraft beaufschlagt wird, durch die das erste Bauteil und das zweite Bauteil auseinandergezogen oder auseinandergedrückt werden. Die Haltekraft der Klebverbindung wirkt dabei der Lösekraft entgegen. Die Einwirkungsdauer der Schwächungsmaßnahme dauert dabei mindestens so lange an, bis die Klebverbindung zwischen dem ersten Bauteil und dem zweiten Bauteil gelöst ist. Das Lösen der Klebverbindung kann auch als Debonding bezeichnet werden.

Im Gegensatz zum Stand der Technik werden die Schwächungsmaßnahme und die Beaufschlagung der Lösekraft nicht nacheinander, sondern gleichzeitig durchgeführt. Für die Erfindung ist es dabei erstmal unerheblich, wenn die Beaufschlagung der Kraft und die Schwächungsmaßnahme nicht gleichzeitig beginnen, sondern etwas versetzt zu unterschiedlichen Zeitpunkten. Beispielsweise kann zunächst die Klebverbindung mit der Lösekraft beaufschlagt werden und danach die Schwächungsmaßnahme gestartet werden. Auch ist es möglich, dass mit der Schwächungsmaßnahme begonnen wird und die Beaufschlagung der Lösekraft etwas später einsetzt.

Durch das erfindungsgemäße Verfahren ist es möglich, ein Maximum für die Auslösekraft zu definieren, sodass die Mittel zur Bereitstellung der Lösekraft entsprechend ausgelegt werden können.

Wenn nun bei einer Serie von Vorrichtungen die durch die Klebverbindung anhaftenden Bauteile jeweils voneinander getrennt werden müssen, und bei einem Exemplar der Serie eine besonders starke Klebverbindung vorliegt, so kann diese Klebverbindung mit der gleichen Auslösekraft gelöst werden wie bei den anderen Exemplaren der Serie. Der Unterschied besteht jedoch darin, dass die Einwirkungsdauer für die starke Klebverbindung länger andauert als für ein Exemplar, bei dem eine Klebverbindung mit durchschnittlicher Haltekraft vorliegt. So lassen sich Klebverbindungen, die zwar alle in einem vorgegebenen Toleranzbereich liegen, aber trotzdem unterschiedlich sein können, mit jeweils gleicher Auslösekraft lösen. Es ist somit nicht notwendig, Mittel vorzuhalten, die eine besonders hohe Auslösekraft bereitstellen können.

Ein weiterer Vorteil gegenüber dem bekannten Verfahren gemäß dem Stand der Technik, bei dem zunächst die Schwächungsmaßnahme über eine konstante Einwirkungsdauer durchgeführt wird und danach erst die Lösekraft angesetzt und kontinuierlich gesteigert wird, bis die Klebverbindung gelöst wird und bricht, besteht darin, dass eine Schwächungsmaßnahme immer nur solange wie notwendig durchgeführt wird. Handelt es sich um eine eher schwächere Klebverbindung, so lässt sich diese nach einer kürzeren Einwirkungsdauer aufbrechen. Entsprechend lässt sich mit dem erfindungsgemäßen Verfahren Zeit sparen. Zudem ist es auch nicht mehr notwendig, der Phase der Schwächungsmaßnahme eine davon zeitlich getrennt Phase der Lösekraftbeaufschlagung nachzuschalten, was ebenfalls Zeit spart.

Zudem weist die Erfindung noch einen weiteren Vorteil auf: Dadurch, dass durch die Auslösekraft die Klebverbindung einer ständigen mechanischen Spannung (beispielsweise Scher- oder Schubspannung, Zugspannung, Biegespannung, Druckspannung, Peelspannung oder Kombination davon) ausgesetzt ist, erweist sich die Schwächungsmaßnahme wesentlich effektiver im Vergleich zu dem Fall, in dem die Klebverbindung nicht unter mechanischer Spannung steht bzw. bei der die auf die Klebverbindung wirkenden Kräfte (bedingt beispielsweise durch das Gewicht einer der beiden Bauteile) wesentlichen kleiner sind. Mit anderen Worten sind beim erfindungsgemäßen Verfahren die Einwirkungsdauern wesentlich kürzer als die Einwirkungsdauern im unbelasteten Zustand der Klebverbindung. Ohne an diese Theorie gebunden zu sein, wird die Klebverbindung durch eine Schwächungsmaßnahme aufgrund von viskoelastischen Effekten, Temperatureffekten und/oder Alterungseffekten wesentlich effektiver geschwächt, wenn die Klebverbindung dabei einer mechanischen Belastung ausgesetzt ist.

In einem Ausführungsbeispiel beginnen die Schwächungsmaßnahme und die Beaufschlagung mit der Lösekraft gleichzeitig oder im Wesentlichen gleichzeitig. Im Wesentlichen gleichzeitig soll in diesem Ausführungsbeispiel bedeuten, dass der Zeitpunkt des Beginns der Schwächungsmaßnahme und der Zeitpunkt des Beginns der Lösekraftbeaufschlagung nicht mehr als 10 % bezogen auf die gesamte Einwirkungsdauer auseinanderliegen. Beträgt die Einwirkungsdauer beispielsweise 500 Sekunden (als Einwirkungsdauer gilt der Zeitraum zwischen Beginn der Schwächungsmaßnahme bis zu dem Zeitpunkt, in dem die Klebverbindung gelöst wird und bricht), liegen der Beginn der Schwächungsmaßnahme und Beginn der Lösekraftbeaufschlagung weniger als 50 Sekunden auseinander. In einem anderen Ausführungsbeispiel liegen Beginn der Schwächungsmaßnahme und Beginn der Lösekraftbeaufschlagung unabhängig von der Einwirkungsdauer maximal 120 Sekunden und bevorzugt maximal 60 Sekunden auseinander.

In einem Ausführungsbeispiel ist die Lösekraft während der Einwirkungsdauer im Wesentlichen zeitlich konstant. So kann die Lösekraft zu Beginn der Einwirkungsdauer auf einen fixen Wert eingestellt werden, der sich bis zum Aufbrechen der Klebverbindung praktisch nicht ändert. Es ist auch möglich, dass die Lösekraft eine oszillierende Komponente beispielsweise in Sinusform aufweist. In einem weiteren Ausführungsbeispiel setzt sich die Lösekraft aus einer konstanten Komponente und der oszillierenden Komponente zusammen.

Die Lösekraft kann auch über die Einwirkungsdauer kontinuierlich oder in Stufen größer werden oder auch kleiner werden. So kann beispielsweise mit einer großen Lösekraft gestartet werden, die in mehreren Stufen abgesenkt wird, bis ein Endwert erreicht. Dieser Endwert wird dann so lange beibehalten, bis die Klebverbindung gelöst wird. In einem anderen Ausführungsbeispiel kann mit einer moderaten Lösekraft begonnen werden, die dann, vorzugsweise in Stufen, bis zu einem Endwert erhöht wird.

Die Richtung, in der die Lösekraft wirkt, kann während der Einwirkungsdauer konstant sein und wird nicht verändert. Alternativ ist es möglich, dass sich die Richtung der Lösekraft ändert, beispielsweise dass die Lösekraft in unterschiedlichen Winkeln eine mechanische Spannung in der Klebverbindung erzeugt.

In einem Ausführungsbeispiel wird die Lösekraft durch eine Federeinheit verursacht. Die Federeinheit kann eine oder mehrere Schraubenfedern aufweisen, die parallel oder in Reihe geschaltet sind. Alternativ oder zusätzlich kann die Federeinheit eine Tellerfeder aufweisen. Es ist auch denkbar, dass die Lösekraft durch hydraulische oder pneumatische Mittel zur Verfügung gestellt wird.

Ein Federweg der Federeinheit kann einstellbar sein, um die Höhe der Lösekraft einstellen zu können. Durch dieses Ausführungsbeispiel mit dem einstellbaren Federweg lässt sich in besonders einfacher Weise die Lösekraft in einer gewünschten Höhe bereitstellen.

Vorzugsweise stellt die Vorrichtung ein Produkt dar, das in großen Stückzahlen im industriellen Maßstab in der Serien- oder Massenproduktion hergestellt wird. Entsprechend kann das erfindungsgemäße Verfahren auf eine Vielzahl gleich hergestellter Vorrichtungen angewendet werden. Beispielsweise kann die Vorrichtung eine Batterie eines Kraftfahrzeugs sein, wobei die in der Batterie gespeicherte Energie für den Antrieb des Kraftfahrzeugs verwendet wird. Die Batterie kann dabei eine Ladekapazität größer als 20 kWh oder 40 kWh haben.

Das erste Bauteil kann eine Kühlplatte der Batterie sein. Das zweite Bauteil kann eine Batteriezelle oder einen Verbund an Batteriezellen sein.

Das erste Bauteil kann eine Dämmschicht oder dergleichen sein, die auf das zweite Bauteil geklebt wird. Der Begriff "Bauteil" ist somit weit auszulegen.

Die Klebverbindung kann eine Klebstoffschicht umfassen. Die Klebverbindung kann eine zusätzliche oder mehrere zusätzliche Schichten umfassen, beispielsweise neben der Klebstoffschicht eine angrenzende Debonding-Schicht, deren Eigenschaften durch die Schwächungsmaßnahme besonders beeinflusst werden können.

Die Schwächungsmaßnahme kann das Anlegen einer elektrischen Spannung an die Klebverbindung umfassen, wobei die elektrische Spannung dazu führt, dass die Haftung zwischen der Klebstoffschicht und der Debonding-Schicht bzw. die Haftung zwischen einem der Bauteile und der Debonding-Schicht nachlässt bzw. eine Delaminierung stattfindet. Insgesamt wird also durch das Anlegen der elektrischen Spannung die Klebverbindung zwischen dem ersten Bauteil und dem zweiten Bauteil geschwächt.

Die Einwirkungsdauer der elektrischen Spannung kann zwischen 100 und 1000 Sekunden betragen (eine solche Einwirkungsdauer kann auch für andere Schwächungsmaßnahmen verwendet werden). Die Spannung kann zwischen 20 und 200 V, vorzugsweise 40 bis 100 V betragen. Ein elektrischer Stromfluss kann bei dieser Schwächungsmaßnahme 5 bis 20 A betragen. Bedingt durch die fortschreitende Delaminierung bei der Schwächungsmaßnahme kann der Widerstand der Klebverbindung ansteigen, wodurch bei konstanter Spannung der Stromfluss sinkt.

Vorzugsweise ist die Spannung über zumindest einen großen Teil der Einwirkungsdauer konstant. Es ist auch möglich, den Stromfluss konstant zu halten, was bei einer fortschreitenden Delaminierung zu einer Erhöhung der Spannung führen würde.

Die Schwächungsmaßnahme kann das Erzeugen einer erhöhten Temperatur umfassen. Soweit die Klebverbindung eine Klebstoffschicht und eine Debonding-Schicht umfasst, schäumt in einem Ausführungsbeispiel die Debonding-Schicht durch den Eintrag von Wärme auf und wird somit strukturell geschwächt. Die Schwächung der Debonding-Schicht bzw. die Schwächung der Haftung der Debonding-Schicht zu einer benachbarten Schicht (zum Beispiel die die Klebstoffschicht oder gebildet durch eines der Bauteile) trägt somit maßgeblich zu Schwächung der Klebverbindung bei.

Der Einsatz der Schwächungsmaßnahme mit den erhöhten Temperaturen bietet sich nur dann an, wenn im gewöhnlichen Betrieb der Vorrichtung derartige Temperaturen nicht zu erwarten sind. Ansonsten würde die Klebstoffverbindung schon im gewöhnlichen Betrieb entsprechend geschwächt werden.

Die Schwächungsmaßnahme kann einen Kontakt mit einem die Klebverbindung schwächenden Medium (zum Beispiel Flüssigkeit), eine Strahlung (zum Beispiel eine Infrarot-Strahlung), eine Induktion oder eine Kombination davon umfassen. Die Schwächungsmaßnahme kann sich auch aus dem oben beschriebenen Anlegen einer elektrischen Spannung und dem Erzeugen einer erhöhten Temperatur zusammensetzen.

Bereits bei der Herstellung der Vorrichtung können konstruktive Mittel vorgesehen sein, durch die die Lösekraft über das erste Bauteil und/oder das zweite Bauteil in die Klebverbindung eingeleitet werden kann. Diese Mittel können eine Aufnahme für eine oben bereits beschriebene Federeinheit aufweisen. Die Aufnahme kann dabei eine erste, dem ersten Bauteil zugeordnete Stützfläche und eine zweite, dem zweiten Bauteil zugeordnete Stützfläche aufweisen. Die Federeinheit kann zum Lösen der Klebverbindung in die Aufnahme gesetzt werden, sodass sie sich an der ersten Stützfläche und der zweiten Stützfläche abstützt und eine mechanische Spannung in der Klebverbindung erzeugt.

Anhand der in der Zeichnung dargestellten Ausführungsbeispiele wird die Erfindung näher erläutert. Es zeigen:
- Figur 1: schematisch eine Anordnung mit einem ersten Bauteil, einem zweiten Bauteil und einer dazwischen angeordneten Klebverbindung; und
- Figur 2: das erste Bauteil und das zweite Bauteil in einer anderen Ausführung.

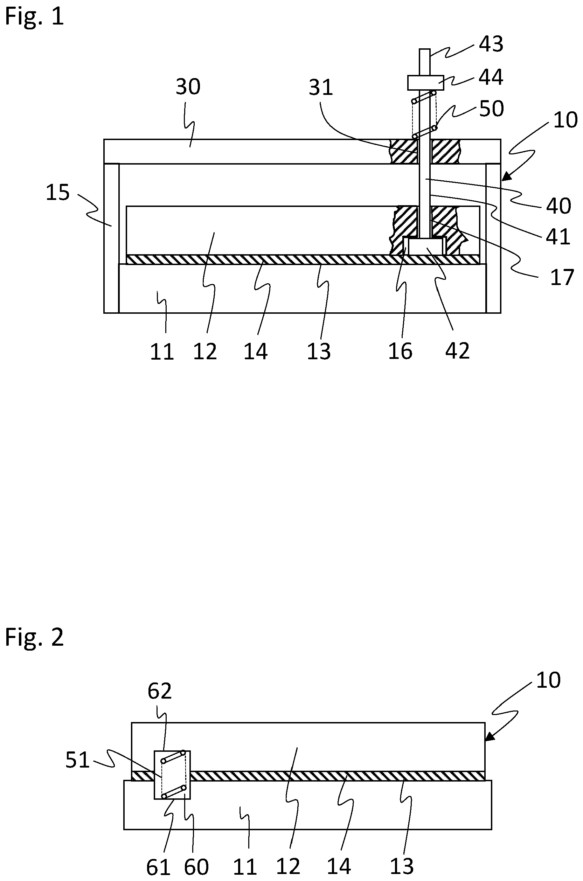

Die Figur 1 zeigt eine Vorrichtung, die in ihrer Gesamtheit mit 10 bezeichnet wird. Die Vorrichtung umfasst ein erstes Bauteil 11, ein zweites Bauteil 12 sowie eine Klebverbindung 13, die zwischen dem ersten Bauteil 11 und dem zweiten Bauteil 12 angeordnet ist. Durch die Klebverbindung 13 sind die beiden Bauteile 11, 12 aneinander befestigt. Die Klebverbindung 13 umfasst eine Klebstoffschicht 14. Die Klebverbindung 13 kann weitere Schichten umfassen, die in der Figur 1 jedoch nicht dargestellt sind. Die Vorrichtung 10 kann beispielsweise eine Batterie für ein elektrisch angetriebenes Kraftfahrzeug sein, wobei das erste Bauteil 11 eine Kühlplatte und das zweite Bauteil ein Verbund von Batteriezellen sein kann. In Figur 1 ist jedoch nur ein Dummy für den Verbund der Batteriezellen dargestellt.

Die Vorrichtung weist des Weiteren ein Gehäuse 15 auf, welches fest mit dem ersten Bauteil 11, also dem unteren Bauteil, verbunden ist. An einem oberen Ende des Gehäuses 15 stützt sich ein Querbalken 30 ab. Der Querbalken 30 ist dabei nicht Teil der Vorrichtung 10, sondern stellt lediglich ein Hilfsmittel dar, die Klebverbindung 13 gemäß dem erfindungsgemäßen Verfahren zu lösen, damit die beiden Bauteile 11, 12 voneinander getrennt werden können. Durch eine Trennung der Bauteile 11, 12 lässt sich die Vorrichtung 10 besser reparieren, wenn eines der Bauteile 11, 12 defekt ist. Auch kann ein Recyceln oder Wiederverwerten der einzelnen Bauteile 11, 12 vereinfacht werden, wenn die Bauteile 11, 12 voneinander getrennt werden können.

Die Figur 1 zeigt auch schematisch einen Zuganker 40 mit einer Zugstange 41 und einem Ankerkopf 42, der in einer Aussparung 16 des zweiten Bauteils 12 sitzt. Es sei darauf hingewiesen, dass Figur 1 nur schematisch die Vorrichtung 1 zeigt und lediglich das Prinzip der vorliegenden Erfindung verdeutlichen soll.

Die Zugstange 41 greift durch eine Bohrung 17 in dem zweiten Bauteil 12 und durch eine Bohrung 31 in dem Querbalken 30. Das obere Ende 43 der Zugstange 41 ist mit einem Außengewinde versehen, sodass sich eine Mutter 44 auf das obere Ende 43 schrauben lässt. Zwischen der Mutter 44 und dem Querbalken 30 ist eine Schraubenfeder 50 angeordnet. Durch das Drehen der Mutter 44 kann die Schraubenfeder 50 zusammengedrückt werden, wodurch das zweite Bauteil 12 nach oben gezogen wird. Da das erste, untere Bauteil 11 fest mit dem Rahmen 15 verbunden ist, führt das Zusammendrücken der Schraubenfeder 50 zu einer mechanischen Spannung in der Klebverbindung.

Die durch die Schraubenfeder 50 verursachte Kraft kann als Lösekraft bezeichnet werden, die die Klebverbindung 13 entsprechend auf Zug belastet. Die Lösekraft wirkt in der Darstellung er Figur 1 vertikal nach oben. Der Lösekraft wirkt die Haltekraft der Klebverbindung 13 entgegen. Solange die Haltekraft größer als die Lösekraft ist, bleibt die Klebverbindung bestehen. Wenn die Lösekraft größer als die Haltekraft ist, wird die Klebverbindung 13 gelöst bzw. gebrochen. Genauer gesagt wird die Klebverbindung 13 gelöst, wenn die Lösekraft größer ist als die Summe der Haltekraft der Klebverbindung und der Gewichtskraft des zweiten Bauteils 12. Durch Drehen der Mutter 44 kann die Lösekraft genau eingestellt werden.

Wird nun die Klebverbindung 13 über eine Einwirkungszeit einer Schwächungsmaßnahme ausgesetzt, wird die Klebverbindung 13 mit der Zeit geschwächt. Dabei wird die Haltekraft der Klebverbindung sukzessive reduziert. Die Klebverbindung 13 gibt dann nach und bricht, wenn die verbleibende Haltekraft kleiner wird als die zuvor eingestellten Lösekraft (soweit die Gewichtskraft des zweiten Bauteils 12 vernachlässigt wird). Die Schwächungsmaßnahme kann das Anlegen einer elektrischen Spannung an die Klebverbindung 13 umfassen.

Figur 2 zeigt ein Ausführungsbeispiel für die Vorrichtung 1, bei der schon bei ihrer Konstruktion eine Aufnahme 60 für die Schraubenfeder vorgesehen wurde. Die Aufnahme 60 weist eine erste Stützfläche 61 auf, die dem ersten Bauteil 11 zugeordnet ist. Eine zweite Stützfläche 62 ist dem zweiten Bauteil 12 zugeordnet. Die Aufnahme 60 soll so beschaffen sein, dass sich eine Schraubenfeder 51 nachträglich in die Aufnahme 60 setzen lässt, also wenn die beiden Bauteile 11, 12 durch die Klebverbindung 13 bereits verbunden worden sind. Die Schraubenfeder 51 dient wie die Schraubenfeder 50 in der Figur 1 dem Zweck, die Klebverbindung 13 mit einer Lösekraft zu beaufschlagen. Die Klebverbindung 13 kann dann bei fortwährender Beaufschlagung der Lösekraft einer Schwächungsmaßnahme ausgesetzt werden. Durch die Gleichzeitigkeit der Beaufschlagung der Lösekraft und der Durchführung der Schwächungsmaßnahme lässt sich die Klebverbindung 13 in vergleichsweise kurzer Zeit lösen.

### Bezugszeichenliste

- 10: Vorrichtung
- 11: erstes Bauteil
- 12: zweites Bauteil
- 13: Klebverbindung
- 14: Klebstoffschicht
- 15: Rahmen
- 16: Aussparung
- 17: Bohrung
- 30: Querbalken
- 31: Bohrung
- 40: Zuganker
- 41: Zugstange
- 42: Ankerkopf
- 43: oberes Ende
- 44: Mutter
- 50: Schraubenfeder
- 51: Schraubenfeder
- 60: Aufnahme
- 61: erste Stützfläche
- 62: zweite Stützfläche

## Patentansprüche

1. Verfahren zum Lösen einer Klebverbindung (13) zwischen einem ersten Bauteil (11) und einem zweiten Bauteil (12) einer Vorrichtung (1), wobei die Klebverbindung (13) innerhalb einer Einwirkungsdauer einer Schwächungsmaßnahme ausgesetzt wird, die geeignet ist, eine Haltekraft der Klebverbindung (13) während der Einwirkungsdauer zu reduzieren, **dadurch gekennzeichnet, dass** die Klebverbindung (13) während der Einwirkungsdauer mit einer Lösekraft beaufschlagt wird, durch die das erste Bauteil (11) und das zweite Bauteil (12) auseinandergezogen oder auseinandergedrückt werden, wobei die Haltekraft der Klebverbindung (13) der Lösekraft entgegenwirkt, wobei die Einwirkungsdauer mindestens so lange andauert, bis die Klebverbindung (13) zwischen dem ersten Bauteil (11) und dem zweiten Bauteil (12) gelöst ist.

2. Verfahren nach Anspruch 1, **dadurch gekennzeichnet, dass** die Lösekraft im Wesentlichen während der Einwirkungsdauer zeitlich konstant ist.

3. Verfahren nach Anspruch 1 oder 2, **dadurch gekennzeichnet, dass** eine Richtung, in der die Lösekraft wirkt, während der Einwirkungsdauer konstant ist.

4. Verfahren nach einem der Ansprüche 1 bis 3, **dadurch gekennzeichnet, dass** die Lösekraft durch eine Federeinheit verursacht wird.

5. Verfahren nach Anspruch 4, **dadurch gekennzeichnet, dass** die Federeinheit eine Schraubenfeder (50; 51) aufweist.

6. Verfahren nach Anspruch 4 oder 5, **dadurch gekennzeichnet, dass** ein Federweg der Federeinheit einstellbar ist, um die Höhe der Lösekraft einstellen zu können.

7. Verfahren nach einem der Ansprüche 1 bis 6, **dadurch gekennzeichnet, dass** die Vorrichtung eine Batterie ist, wobei das erste Bauteil (11) eine Kühlplatte und das zweite Bauteil (12) eine Batteriezelle oder ein Verbund von Batteriezellen ist.

8. Verfahren nach einem der Ansprüche 1 bis 7, **dadurch gekennzeichnet, dass** die Schwächungsmaßnahme ein Anlegen einer elektrischen Spannung an die Klebverbindung (13) umfasst.

9. Verfahren nach Anspruch 8, **dadurch gekennzeichnet, dass** die Spannung über zumindest einen großen Teil der Einwirkungsdauer konstant ist.

10. Verfahren nach einem der Ansprüche 1 bis 9, **dadurch gekennzeichnet, dass** die Schwächungsmaßnahme ein Erzeugen einer erhöhten Temperatur, einen Kontakt mit einem die Klebverbindung (13) schwächenden Medium, eine Strahlung, eine Induktion oder eine Kombination davon umfasst.

11. Verfahren nach einem der Ansprüche 1 bis 10, **dadurch gekennzeichnet, dass** bei der Herstellung der Vorrichtung (1) konstruktive Mittel vorgesehen werden, durch die die Lösekraft in das erste Bauteil (11) und in das zweite Bauteil (12) einleitbar ist.

12. Verfahren nach Anspruch 11, **dadurch gekennzeichnet, dass** die Mittel eine Aufnahme (60) für eine Federeinheit aufweisen, wobei die Aufnahme (60) eine erste, dem ersten Bauteil zugeordnete Stützfläche (61) und eine zweite, dem zweiten Bauteil zugeordnete Stützfläche (62) aufweist, wobei die Federeinheit zum Lösen der Klebverbindung in die Aufnahme gesetzt wird, sodass sie sich an der ersten Stützfläche (61) und der zweiten Stützfläche (62) abstützt.

## Geänderte Patentansprüche

### Geänderte Patentansprüche gemäss Regel 137(2) EPÜ.

1. Verfahren zum Lösen einer Klebverbindung (13) zwischen einem ersten Bauteil (11) und einem zweiten Bauteil (12) einer Vorrichtung (1), wobei die Klebverbindung (13) innerhalb einer Einwirkungsdauer einer Schwächungsmaßnahme ausgesetzt wird, die geeignet ist, eine Haltekraft der Klebverbindung (13) während der Einwirkungsdauer zu reduzieren, wobei die Klebverbindung (13) während der Einwirkungsdauer mit einer Lösekraft beaufschlagt wird, durch die das erste Bauteil (11) und das zweite Bauteil (12) auseinandergezogen oder auseinandergedrückt werden, wobei die Haltekraft der Klebverbindung (13) der Lösekraft entgegenwirkt, wobei die Einwirkungsdauer mindestens so lange andauert, bis die Klebverbindung (13) zwischen dem ersten Bauteil (11) und dem zweiten Bauteil (12) gelöst ist, **dadurch gekennzeichnet, dass** bei der Herstellung der Vorrichtung (1) konstruktive Mittel vorgesehen werden, durch die die Lösekraft in das erste Bauteil (11) und in das zweite Bauteil (12) einleitbar ist und dass die Mittel eine Aufnahme (60) für eine Federeinheit aufweisen, wobei die Aufnahme (60) eine erste, dem ersten Bauteil zugeordnete Stützfläche (61) und eine zweite, dem zweiten Bauteil zugeordnete Stützfläche (62) aufweist, wobei die Federeinheit zum Lösen der Klebverbindung in die Aufnahme gesetzt wird, sodass sie sich an der ersten Stützfläche (61) und der zweiten Stützfläche (62) abstützt.

2. Verfahren nach Anspruch 1, **dadurch gekennzeichnet, dass** die Lösekraft im Wesentlichen während der Einwirkungsdauer zeitlich konstant ist.

3. Verfahren nach Anspruch 1 oder 2, **dadurch gekennzeichnet, dass** eine Richtung, in der die Lösekraft wirkt, während der Einwirkungsdauer konstant ist.

4. Verfahren nach einem der Ansprüche 1 bis 3, **dadurch gekennzeichnet, dass** die Lösekraft durch eine Federeinheit verursacht wird.

5. Verfahren nach Anspruch 4, **dadurch gekennzeichnet, dass** die Federeinheit eine Schraubenfeder (50; 51) aufweist.

6. Verfahren nach Anspruch 4 oder 5, **dadurch gekennzeichnet, dass** ein Federweg der Federeinheit einstellbar ist, um die Höhe der Lösekraft einstellen zu können.

7. Verfahren nach einem der Ansprüche 1 bis 6, **dadurch gekennzeichnet, dass** die Vorrichtung eine Batterie ist, wobei das erste Bauteil (11) eine Kühlplatte und das zweite Bauteil (12) eine Batteriezelle oder ein Verbund von Batteriezellen ist.

8. Verfahren nach einem der Ansprüche 1 bis 7, **dadurch gekennzeichnet, dass** die Schwächungsmaßnahme ein Anlegen einer elektrischen Spannung an die Klebverbindung (13) umfasst.

9. Verfahren nach Anspruch 8, **dadurch gekennzeichnet, dass** die Spannung während der Einwirkungsdauer konstant ist.

10. Verfahren nach einem der Ansprüche 1 bis 9, **dadurch gekennzeichnet, dass** die Schwächungsmaßnahme ein Erzeugen einer erhöhten Temperatur, einen Kontakt mit einem die Klebverbindung (13) schwächenden Medium, eine Strahlung, eine Induktion oder eine Kombination davon umfasst.
